# FASCICULE DE BREVET EUROPEEN

(11) **EP 2 073 224 B1**
(45) Date de publication et mention de la délivrance du brevet: **11.12.2013**
(21) Numéro de dépôt: 08354075.7
(22) Date de dépôt: 21.10.2008
(51) Int. Cl.: H01G 2/14, H01G 2/18

(54) **Dispositif de protection pour condensateur**
Kondensatorschutzvorrichtung
Capacitor protection device

(30) Priorité: 17.12.2007 FR 0708787
(43) Date de publication de la demande: 24.06.2009
(73) Titulaire: Schneider Electric Industries SAS, 92500 Rueil-Malmaison (FR)
(72) Inventeur: Pellet-Gallay, Romain, 38050 Grenoble Cedex 09 (FR); Lupin, Jean-Marc, 38050 Grenoble Cedex 09 (FR)
(74) Mandataire: Péru, Laurence

(56) Documents cités:
- EP-A- 0 634 760
- EP-A- 1 030 321
- EP-A- 1 045 408
- FR-A- 2 589 618
- FR-A- 2 782 411
- US-A- 5 148 347

## Description

### DOMAINE TECHNIQUE DE L'INVENTION

L'invention relève du domaine des condensateurs, en particulier des condensateurs de puissance présentant une propriété d'auto-cicatrisation, connus également sous le nom de condensateurs auto-cicatrisants.

Plus particulièrement, l'invention concerne un dispositif de protection pour condensateur équipé de deux armatures et d'une enveloppe, ledit dispositif comprenant:
- un boitier destiné à être monté sur l'enveloppe,
- un conducteur fracturable destiné à être monté en série avec l'une des armatures,
- des moyens de rupture pour rompre le conducteur, et
- une partie mobile déplaçable, sous l'effet de la pression dans l'enveloppe, dans un mouvement en translation le long d'un axe longitudinal, ladite partie mobile étant montée de façon à actionner les moyens de rupture lorsque la pression dépasse un seuil de déclenchement.

### ETAT DE LA TECHNIQUE

Les condensateurs de puissance sont généralement utilisés pour réaliser une compensation d'énergie réactive dans les réseaux électriques ou bien dans la fabrication de systèmes de filtrage d'harmoniques.

Ces condensateurs comportent généralement au moins un enroulement bobiné réalisé à partir de deux couches de film isolant sur lequel une couche métallique conductrice a été déposée. Les enroulements sont généralement entourés d'un matériau tel que de la résine, de l'huile, du gel ou du gaz.

Dans les condensateurs auto-cicatrisants, la présence d'un défaut dans le film isolant peut entraîner un claquage localisé conduisant à l'évaporation des électrodes au voisinage du défaut. Lorsque le condensateur est sollicité de façon anormale ou lorsque qu'il est en fin de vie, les propriétés d'auto-cicatrisation peuvent être détériorées. Par exemple, l'augmentation du courant entre les armatures du condensateur peut provoquer une élévation de la température au voisinage du défaut et une production de gaz de décomposition du film isolant dont la pression peut entraîner la rupture de l'enveloppe.

La demande de brevet FR 2 589 618 décrit un dispositif de protection pour condensateur comportant un fusible monté en série avec l'une des armatures du condensateur, ce fusible étant détruit par fusion lors de l'apparition d'un courant de défaut. Ce dispositif comporte, en outre, un piston pour provoquer la rupture du fusible lorsque la pression des gaz de décomposition à l'intérieur du boitier du condensateur dépasse une valeur de sécurité.

Un inconvénient du dispositif précité est que la force disponible pour rompre le fusible dépend de la pression des gaz de décomposition générés et de la vitesse de montée en pression de ces gaz.

### EXPOSE DE L'INVENTION

L'invention vise à remédier aux problèmes techniques des dispositifs de protection de l'art antérieur en proposant un dispositif de protection pour condensateur équipé de deux armatures et d'une enveloppe, ledit dispositif comprenant :
- un boitier destiné à être monté sur l'enveloppe,
- un conducteur fracturable destiné à être monté en série avec l'une des armatures,
- des moyens de rupture pour rompre le conducteur, et
- une partie mobile déplaçable, sous l'effet de la pression dans l'enveloppe, dans un mouvement en translation le long d'un axe longitudinal, ladite partie mobile étant montée de façon à actionner les moyens de rupture lorsque la pression dépasse un seuil de déclenchement.

Dans le dispositif selon l'invention, les moyens de rupture comportent des moyens d'accumulation d'une énergie nécessaire pour rompre le conducteur, et des moyens de verrouillage et de déverrouillage permettant de libérer ladite énergie lorsque les moyens de rupture sont actionnés.

De préférence, les moyens de rupture sont actionnés lorsque la partie mobile est déplacée au delà d'une position limite correspondant au dépassement du seuil de déclenchement.

Selon un mode de réalisation préféré, les moyens de rupture comportent un couteau et un porte-couteau sur lequel le couteau est monté fixement. De préférence, le porte-couteau est monté mobile dans le boitier et est déplaçable en rotation autour de l'axe longitudinal. De préférence, le dispositif comporte des moyens de guidage en rotation du porte-couteau.

Selon un mode de réalisation, les moyens de d'accumulation d'énergie peuvent comporter un ressort de torsion monté entre le porte-couteau et le boitier, ledit ressort étant bandé lorsque le porte-couteau est dans une position armée. De préférence, les moyens de verrouillage et de déverrouillage permettent, en outre, de maintenir le porte couteau dans la position armée. De préférence, le porte-couteau est également déplaçable dans un mouvement de translation selon l'axe longitudinal.

Avantageusement, les moyens de verrouillage et de déverrouillage comportent :
- au moins une glissière axiale orientée dans une direction parallèle à l'axe longitudinale,
- au moins une protubérance pour être engagée dans la glissière axiale, et
- des moyens de maintien de la protubérance dans la glissière axiale.

De préférence, la protubérance est disposée sur une surface interne du boitier, et la glissière axiale est disposée sur une surface externe périphérique du porte-couteau. Avantageusement, les moyens de maintien de la protubérance dans la glissière axiale comportent des moyens de rappel montés entre le porte-couteau et le boitier pour appliquer sur le porte-couteau une force de rappel et pour maintenir le porte-couteau dans la position armée.

Selon un mode de réalisation préféré, le porte-couteau comporte des moyens d'écartement des extrémités du conducteur apparaissant consécutivement à la rupture du conducteur. De préférence, les moyens d'écartement comportent une goulotte disposée dans le porte-couteau dans laquelle est logé au moins une partie du conducteur fracturable de sorte que, consécutivement à la rupture du conducteur fracturable, ladite partie du conducteur fracturable est entrainée par la rotation du porte-couteau.

Selon un mode de réalisation préféré, la partie mobile est essentiellement constituée par une partie centrale mobile d'une membrane déformable comportant une partie périphérique destinée à être montée sur le boitier. De préférence, la partie périphérique est montée hermétiquement sur le boitier pour isoler un volume comportant le conducteur fracturable. De préférence, la membrane est du type cloquant.

Selon un mode de réalisation préféré, le conducteur fracturable comporte un élément fusible.

L'invention concerne également un condensateur équipé de deux armatures et comportant un dispositif de protection dudit condensateur tel que décrit précédemment, ledit dispositif comportant un conducteur fracturable monté en série avec l'une des armatures.

### BREVE DESCRIPTION DES FIGURES

D'autres avantages et caractéristiques ressortiront plus clairement de la description qui suit de modes particuliers de réalisation de l'invention, donnés à titre d'exemples non limitatifs, et représentés dans les figures annexées.

La figure 1 représente une vue en perspective de dessus d'un mode de réalisation du dispositif de l'invention.

La figure 2 représente une vue en perspective de dessous du dispositif de la figure 1 dans lequel la partie mobile est dans une position initiale.

La figure 3 représente une vue en perspective de dessous du dispositif de la figure 1 dans lequel la partie mobile est dans une position entrainant le déverrouillage de l'énergie nécessaire pour rompre le conducteur.

La figure 4 représente un système de trois condensateurs dont l'un d'entre eux est équipé d'un dispositif de protection selon l'invention.

La figure 5 représente une vue latéral du dispositif représenté à la figure 2.

La figure 6 est une vue en coupe longitudinale selon l'axe BB-BB du dispositif représenté à la figure 2.

La figure 7 est une vue en coupe transversale selon l'axe DD-DD du dispositif représenté à la figure 2.

La figure 8 est une vue en coupe longitudinale détaillée d'une partie du dispositif représenté à la figure 2.

La figure 9 est une vue en perspective latérale du porte-couteau.

La figure 10 est une vue en perspective de dessus du porte-couteau représenté à la figure 9.

La figure 11 est une vue en perspective de dessous du porte-couteau représenté à la figure 9.

La figure 12 est une vue en coupe longitudinale selon l'axe CC-CC du dispositif représenté à la figure 2 dans lequel la partie mobile est dans une position initiale.

La figure 13 est une vue de dessous, sans la membrane, du dispositif représenté à la figure 12.

La figure 14 est une vue en coupe longitudinale selon l'axe CC-CC du dispositif représenté à la figure 2 dans lequel la partie mobile est dans une position entrainant le déverrouillage de l'énergie nécessaire pour rompre le conducteur.

La figure 15 est une vue de dessous, sans la membrane, du dispositif représenté à la figure 14.

La figure 16 est une vue éclatée de différentes pièces d'un mode de réalisation du dispositif de protection.

Les figures 17a, 17b et 17c représentent des coupes schématiques d'un mode de réalisation du dispositif de protection selon l'invention dans lesquelles le porte-couteau est dans différentes positions.

### DESCRIPTION DETAILLEE D'UN MODE DE REALISATION

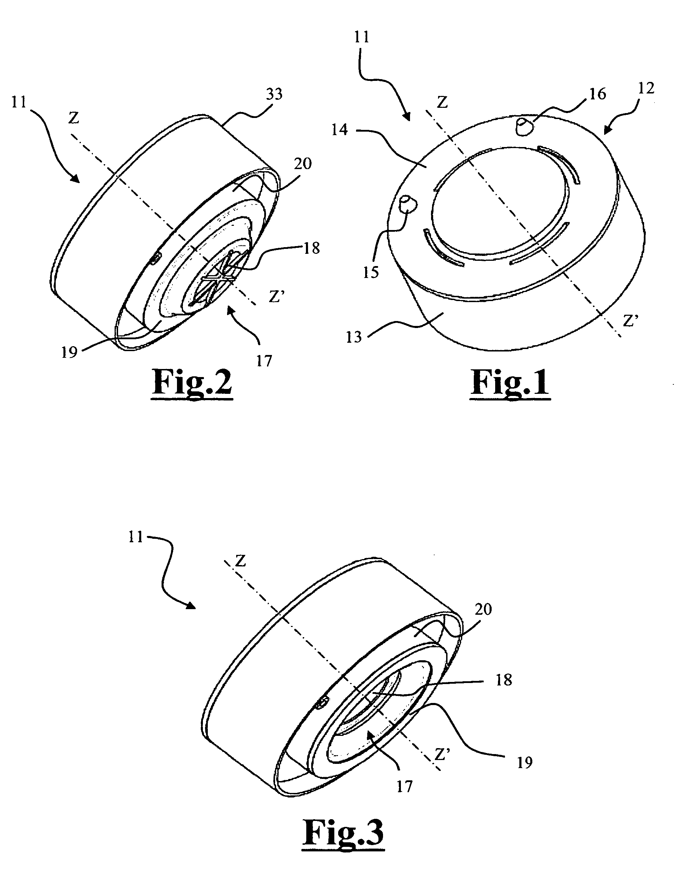

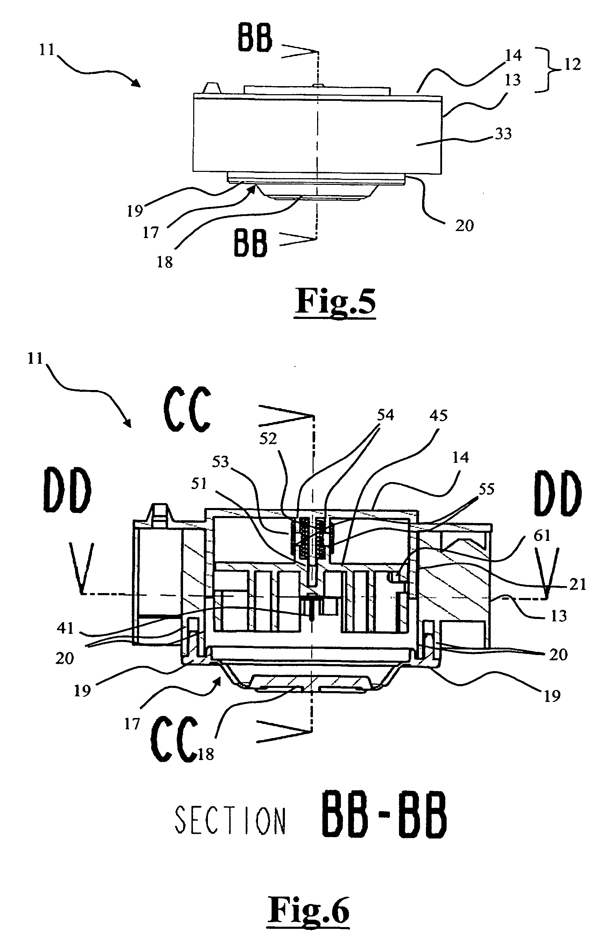

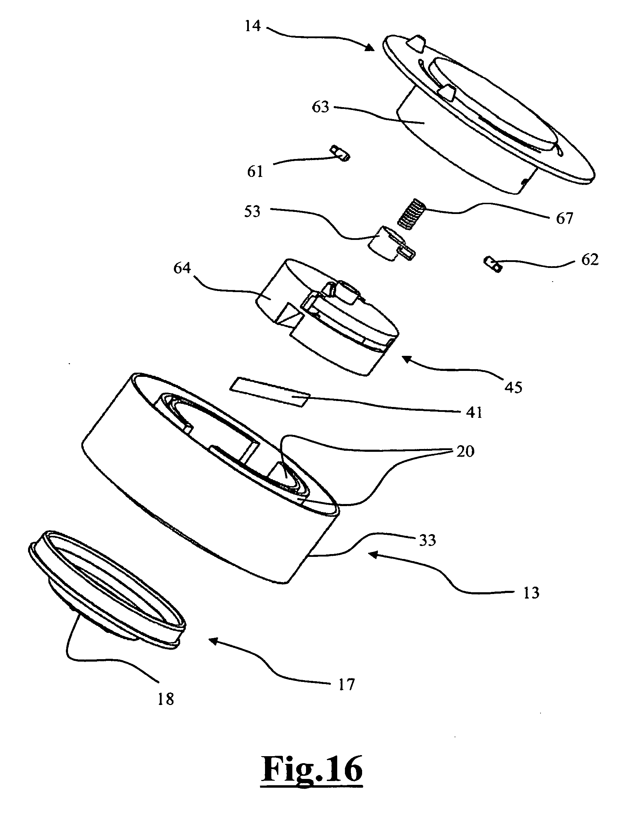

Comme cela est représenté sur la figure 1, le dispositif de protection 11 comprend un boitier 12 comportant un capot 13 et un chapeau 14 recouvrant ledit capot. Le chapeau du boitier comporte des ouvertures 15 et 16 pour le passage des conducteurs de connexion avec les armatures du condensateur sur lequel le dispositif de protection est destiné à être monté. Comme cela est illustré sur la figure 16, le boitier 12 du dispositif de protection est assemblé en couvrant le capot 13 avec le chapeau 14. Comme cela est visible sur les figures 6 et 16, lors de l'assemblage, la surface externe d'une paroi latérale 63 du chapeau coopère avec la surface interne 21 d'une paroi latérale 20 du capot 13.

Comme cela est représenté sur les figures 2 et 3, la partie inférieure du dispositif de protection 11 comporte une membrane déformable 17 qui vient fermer hermétiquement le boitier 12. La membrane 17 comporte une partie mobile 18 qui est déplaçable, sous l'effet de la pression dans l'enveloppe, dans un mouvement en translation le long d'un axe longitudinal Z-Z'. Dans le cas représenté, la partie mobile 18 est essentiellement constituée par la partie centrale de la membrane. La membrane comporte également une partie périphérique 19 coopérant avec les bords de parois latérales internes 20 du capot 13. Comme cela est illustré sur la figure 16, le boitier 12 est donc refermé, dans sa partie inférieure, par la membrane déformable 17. Dans le mode de réalisation représenté, la membrane 17 est du type cloquant, c'est à dire que la partie mobile 18 de cette membrane peut se déplacer entre deux positions stables. Dans le cas de la figure 2, la partie mobile 18 est dans une première position initiale. Dans cette première position, la membrane est dite dans une configuration non cloquée. Cette position est maintenue tant que la pression à l'intérieur de l'enveloppe du condensateur est inférieure à un seuil de déclenchement. Dans le cas de la figure 3, la partie mobile 18 est dans une seconde position extrême permettant d'actionner les moyens de rupture. Dans cette seconde position, la membrane est dite dans une configuration cloquée. Le déplacement dans cette seconde position est obtenu quand la pression à l'intérieur de l'enveloppe du condensateur dépasse le seuil de déclenchement.

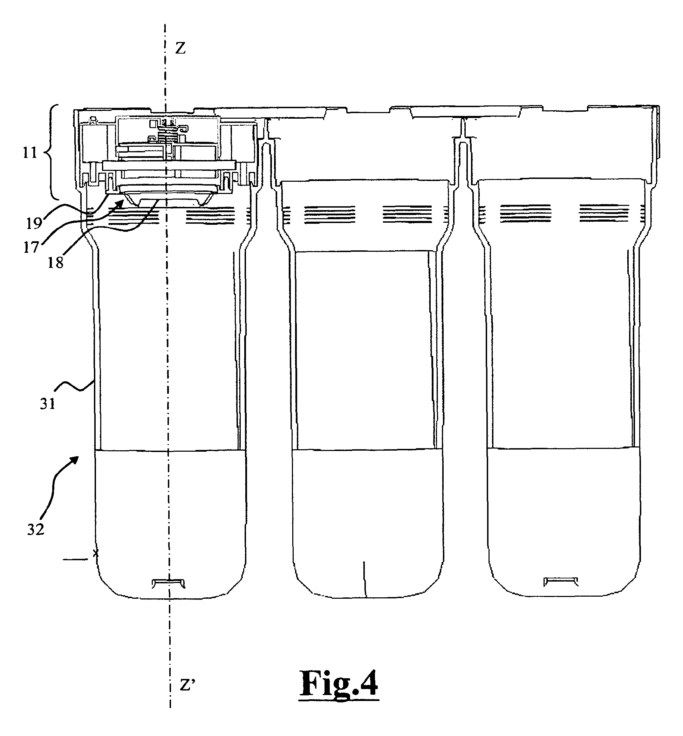

Comme cela est illustré sur la figure 4, le dispositif de protection 11 décrit précédemment est destiné à être monté sur l'enveloppe 31 d'un condensateur 32, par exemple d'un condensateur auto-cicatrisant. Ce type de condensateur comporte généralement un enroulement bobiné, non représenté, logé dans l'enveloppe 31. Lorsqu'un condensateur non protégé par le dispositif de l'invention est sollicité de façon anormale ou lorsque qu'il est en fin de vie, les propriétés d'auto-cicatrisation sont détériorées ce qui entraîne la production d'un gaz de décomposition et une élévation de la pression de ce gaz pouvant aller jusqu'à la rupture de l'enveloppe. La présence du dispositif de protection 11 sur le condensateur permet de prévenir ce type d'incident. Comme cela est visible à la figure 4, le dispositif de protection 11 est monté sur le condensateur 32 de façon à fermer hermétiquement l'enveloppe 31 du condensateur. Ce type de montage est également décrit dans le brevet français FR 2 890 486. La partie mobile 18 est donc soumise aux sollicitations de la pression régnant à l'intérieur de l'enveloppe 31 du condensateur 32. La partie inférieure du boitier 12 comporte la membrane 17 décrite précédemment dont la partie périphérique 19 coopère avec les bords de parois latérales internes 20 du capot 13. L'assemblage du boitier 12, c'est-à-dire le capot 13 et le chapeau 14 ainsi que de la membrane 17, est illustrée par la vue éclatée de la figure 16.

Dans ce qui suit, les éléments internes du dispositif de protection sont décrits de façon plus détaillée. Dans le dispositif de la figure 6, le capot 13, le chapeau 14 et la membrane 17 sont représentés selon une coupe longitudinale. La partie mobile 18 formée par la partie centrale de la membrane 17 ainsi que la partie périphérique 19 de cette membrane sont également visibles sur cette figure. Une séparation hermétique entre, d'un côté l'enveloppe du condensateur sur laquelle le dispositif de protection est destiné à être monté et, de l'autre côté le boitier dudit dispositif de protection, est obtenue par l'intermédiaire du capot 13 et de la membrane 17. Cette séparation hermétique peut également être assurée par le coulage d'une matière polymérisable ou par l'utilisation d'un joint.

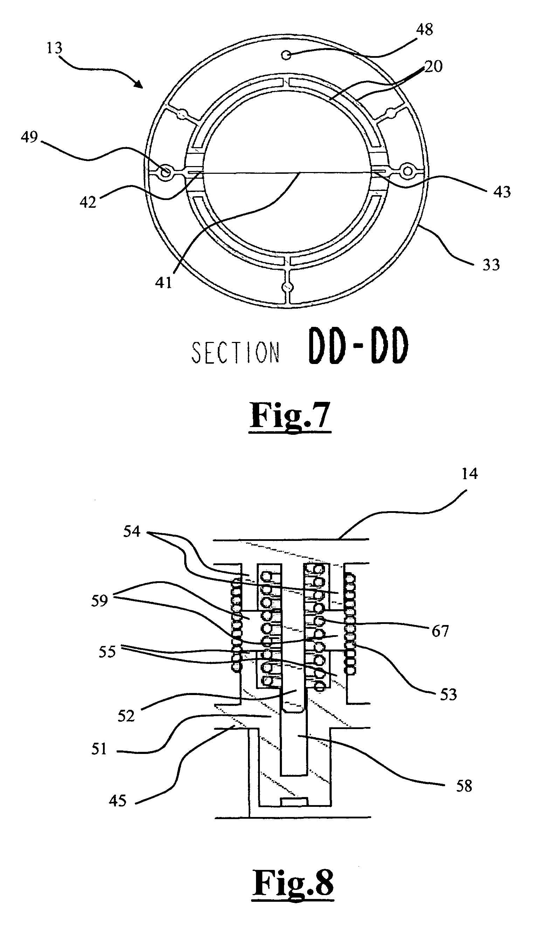

Le dispositif de protection comporte, en outre, un conducteur fracturable 41 représenté de profil sur la figure 6. Par fracturable, on entend généralement que le conducteur peut être rompu par cassure ou par déchirure. Comme cela est visible sur la figure 7, le conducteur fracturable 41 s'étend à travers le boitier 12, et plus particulièrement à travers le capot 13 dudit boitier. Avant l'actionnement des moyens de rupture, le conducteur fracturable est tenu tendu par deux points d'ancrage 42 et 43.

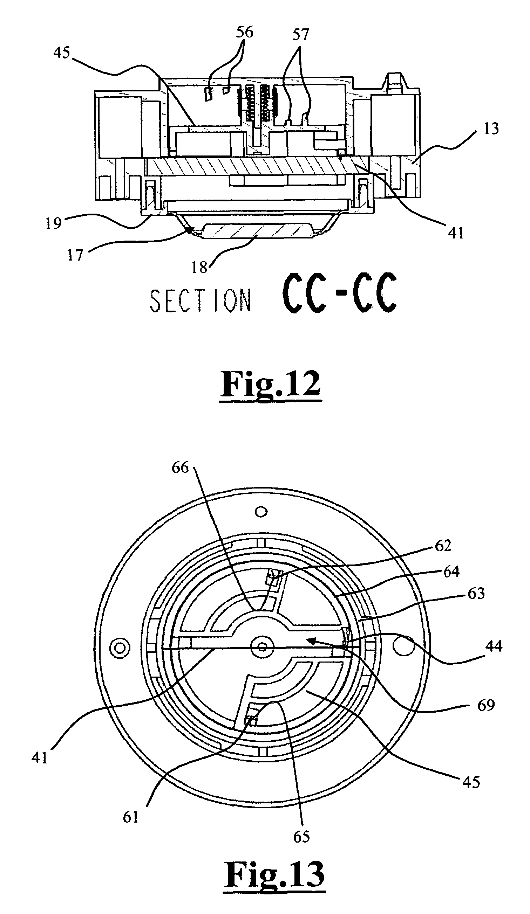

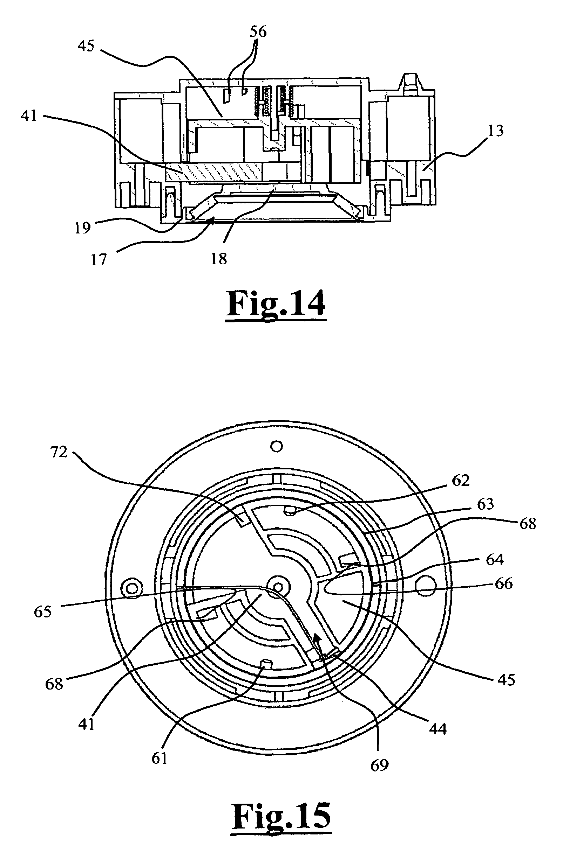

Dans le mode de réalisation représenté, les moyens de rupture comportent un couteau 44 visible sur les figures 13 et 15, et un porte-couteau 45 sur lequel le couteau est monté fixement. Le couteau est fixé sur une partie périphérique du porte-couteau.

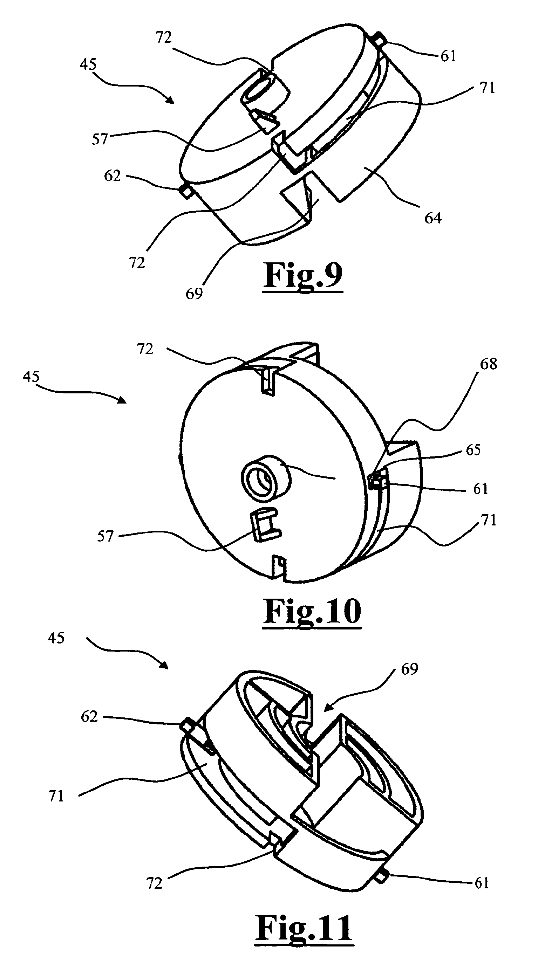

Comme cela est visible sur la figure 6, et de manière plus détaillée sur la figure 8, le porte-couteau comporte un manchon 51 monté mobile autour d'un axe 52 sensiblement confondu avec l'axe longitudinal Z-Z'. Grâce à ce montage, le porte-couteau est déplaçable en rotation autour de l'axe 52. La rotation du porte-couteau dans un sens d'actionnement permet d'entrainer le couteau vers un point de rupture du conducteur fracturable 41. Les moyens de rupture comportent également des moyens d'accumulation d'énergie, en l'occurrence un ressort de torsion 53 monté entre le porte-couteau 45 et le chapeau 14 du boitier. En faisant tourner le porte-couteau dans un sens opposé au sens d'actionnement et en bandant le ressort de torsion, ledit porte-couteau peut être positionné dans une position armée. Dans cette position armée, une énergie de torsion du ressort 53 est accumulée. Grâce à cette énergie, lors de l'actionnement des moyens de rupture, il est donc possible de faire tourner le porte-couteau dans le sens d'actionnement avec une vitesse et/ou une accélération suffisante pour rompre le conducteur fracturable. Comme cela est visible sur la figure 8, le ressort de torsion 53 est disposé autour des enveloppes de deux éléments cylindriques 54 et 55 disposés respectivement sur le chapeau 14 et sur le porte-couteau 45. Comme cela est visible sur les figures 9, 10 et 12, les extrémités du ressort de torsion 53 coopèrent avec une butée 56 disposée sur le chapeau 14 et une butée 57 disposée sur le porte-couteau.

Comme cela est visible sur la figure 6, et de manière plus détaillée sur la figure 8, un espace 58 sur un côté de manchon 51 et un espace 59 entre les deux éléments cylindriques 54 et 55 autorisent un débattement en translation dudit manchon le long de l'axe 52. Ainsi, le porte-couteau peut se déplacer, non seulement dans un mouvement de rotation autour de l'axe Z-Z', mais également dans un mouvement de translation le long de ce même axe.

Les moyens de rupture comportent, en outre, des moyens de verrouillage et de déverrouillage.

Une première fonction des moyens de verrouillage et de déverrouillage est le verrouillage, c'est à dire le maintien du porte-couteau dans la position armée, position dans laquelle le ressort de torsion est bandé. Cette fonction de verrouillage est généralement mise en oeuvre lors de l'assemblage du dispositif de protection pendant lequel le porte-couteau est tourné dans un sens opposé au sens d'actionnement. Comme cela est visible sur les figures 13, 15 et 16, les moyens de verrouillage et de déverrouillage comportent deux protubérances 61, 62 faisant saillies sur la surface interne de parois latérales 63 du chapeau 14 du boitier. A titre d'exemples, les protubérances peuvent être des ergots ou des goupilles. Comme cela est visible sur les figures 9, 10, 11 et 16, les moyens de verrouillage et de déverrouillage comportent également deux glissières axiales 65, 66 orientées selon une direction parallèle à l'axe longitudinal Z-Z' et disposées sur une surface externe périphérique 64 du porte-couteau 42. Lors de l'assemblage, après avoir tourné le porte-couteau dans le sens opposé au sens d'actionnement afin de bander le ressort de torsion, les protubérances 61, 62 sont engagées dans les glissières axiales 65, 66. Après l'assemblage, le porte-couteau 45 est donc maintenu dans une position armée à l'intérieur d'un volume défini par les parois latérales 63 du chapeau 14. Dans cette position, la rotation du porte couteau est entravée par l'engagement des protubérances dans les glissières axiales. Les moyens de verrouillage et de déverrouillage comportent, en outre, des moyens de maintien des protubérances 61, 62 dans les glissières axiales 65, 66. Comme cela est visible sur les figures 6 et 8, ces moyens de maintien comportent des moyens de rappel, en l'occurrence un ressort de compression 67 monté entre le porte-couteau 45 et le chapeau 14 du boitier. Ce ressort est monté autour de l'axe 52 du chapeau 14. Pour éviter que le ressort de compression soit tordu, il est logé à l'intérieur des éléments cylindriques 54, 55 respectivement disposés sur le chapeau 14 et sur le porte-couteau 45. Les extrémités du ressort de compression coopèrent avec le chapeau 14 et le porte-couteau 45 pour appliquer sur le porte-couteau une force de rappel. Comme cela est visible sur la figure 10, le porte-couteau comporte des butées 68 à l'extrémité de chaque glissière axiale 65, 66. Sous la contrainte exercée par le ressort de compression 67, les protubérances 61, 62 viennent s'appuyer sur les butées 68. Le ressort de compression et la butée permettent donc de maintenir le porte-couteau dans la position armée. Ils contribuent donc à la fonction de verrouillage en limitant le déplacement en translation et en maintenant les protubérances 61, 62 engagées dans les glissières axiales 65, 66.

La position armée du porte-couteau est illustrée sur les figures 12 et 13. Comme cela est visible sur la figure 12, la partie mobile 18 que constitue la partie centrale de la membrane 17 est dans la position initiale. Dans cette position initiale, la partie mobile n'est pas en contact avec le porte-couteau 45 et n'exerce aucune force sur ledit porte-couteau. De cette façon, le porte-couteau est maintenu, grâce au ressort de compression, en contact avec les protubérances par sa butée 68. Le ressort de compression 67, les protubérances 61, 62 et la butée 68 contribuent donc au verrouillage du déplacement en translation du porte-couteau. Comme cela est visible sur la figure 13, les protubérances 61, 62 faisant saillies sur la surface interne des parois latérales 63 du chapeau sont respectivement engagées dans les glissières axiales 65, 66 disposées sur la surface externe périphérique 64 du porte-couteau 45. De cette façon, la rotation du porte-couteau est entravée. Les protubérances et les glissières axiales contribuent donc au verrouillage de la rotation du porte-couteau.

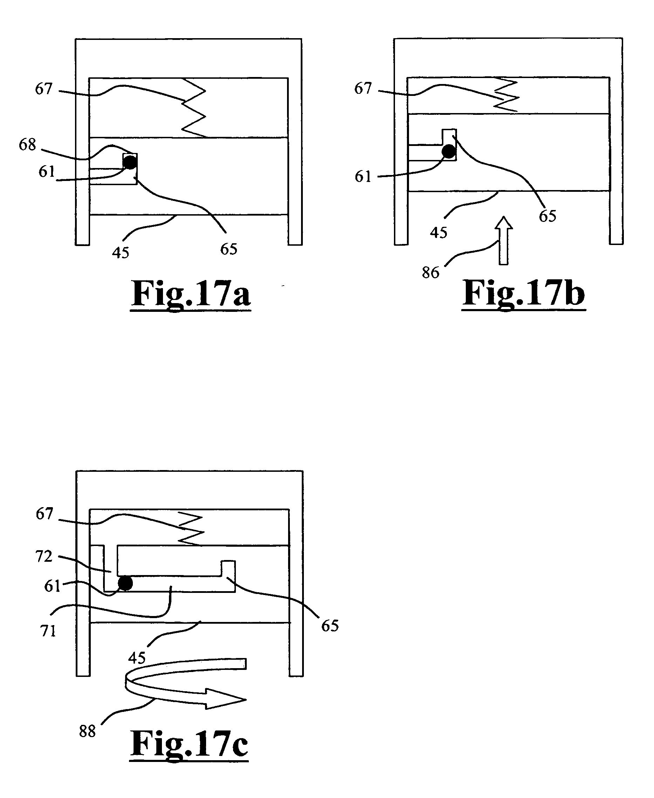

La position armée du porte-couteau est représentée schématiquement à la figure 17a. La partie mobile non représentée sur la figure 17a est dans une position stable initiale dans laquelle elle n'exerce aucune force sur le porte-couteau 45. De cette façon, le porte couteau 45 n'est pas déplacé en translation. Le porte-couteau est donc maintenu par le ressort de compression 67 et par les protubérances 61, 62 sur sa butée 68. Dans la position armée, la rotation du porte-couteau est entravée par l'engagement des protubérances 61, 62 dans les glissières axiales 65, 66 parallèles à l'axe de translation et perpendiculaires au plan de rotation. L'énergie du ressort de torsion est donc maintenue verrouillée.

Une seconde fonction des moyens de verrouillage et de déverrouillage est le déverrouillage permettant d'actionner lesdits moyens de rupture en libérant l'énergie nécessaire pour rompre le conducteur. En l'occurrence, les moyens de verrouillage et de déverrouillage permettent, lorsque les moyens de rupture sont actionnés, de ne plus maintenir le porte-couteau dans sa position armée. Lors de l'actionnement des moyens de rupture, le porte-couteau est donc déplacé en rotation, avec une énergie suffisante, pour entrainer le couteau vers le point de rupture du conducteur fracturable. A cette fin, la partie mobile est montée de façon à actionner les moyens de rupture lorsque la pression dépasse le seuil de déclenchement. Dans le mode de réalisation représenté, la partie mobile 18 est déplaçable dans un mouvement de translation le long de l'axe longitudinal Z-Z' en fonction de la pression régnant dans l'enveloppe du condensateur. Lorsque cette pression dépasse le seuil de déclenchement, la partie mobile vient pousser le porte-couteau 45 en lui appliquant une force opposée à la force de rappel exercée par le ressort de compression 67 des moyens de maintien. Lorsque cette force est supérieure à la force de rappel, le porte-couteau est déplacé en translation. Dans ce mouvement de translation, le porte-couteau est guidé à l'aide des protubérances 61, 62 engagées dans les glissières axiales 65, 66 sensiblement parallèles à l'axe longitudinal. Ce mouvement de translation du porte-couteau se poursuit jusqu'à ce que les protubérances 61, 62 dépassent une extrémité des glissières axiales 65, 66. A ce stade, les protubérances 61, 62 sont désengagées des glissières axiales 65, 66 et l'énergie accumulée par le ressort de torsion 53 est libérée. De cette façon, le porte-couteau 45 entame un mouvement de rotation dans le sens d'actionnement.

Comme cela est visible sur les figures 9 à 11, les extrémités de chaque glissière axiales 65, 66 par lesquelles les protubérances 61, 62 sont délogées débouchent sur des glissières latérales 71 orientées dans un plan sensiblement perpendiculaire à l'axe longitudinal Z-Z'. Ces glissières latérales 71 sont des moyens de guidage permettant de guider le mouvement de rotation du porte-couteau. Les protubérances 61, 62 sont ainsi engagées dans les glissières latérales 71 et le mouvement de rotation sous l'impulsion du ressort de torsion 53 du porte-couteau n'est plus entravé.

Le déplacement du porte-couteau après l'actionnement des moyens de rupture est illustré sur les figures 14 et 15. Comme cela est visible sur la figure 14, la partie mobile 18 que constitue la partie centrale de la membrane 17 est dans une position d'actionnement. Lors du déplacement de la partie mobile, cette dernière vient en contact avec le porte-couteau 45 et exerce sur ledit porte-couteau une force d'intensité supérieure à la force de rappel du ressort de compression. De cette façon, le porte-couteau se déplace en translation, puis en rotation pour entraîner le couteau vers le point de rupture du conducteur fracturable et rompre ce dernier. Comme cela est visible sur la figure 15, les protubérances 61, 62 du chapeau sont respectivement désengagées des glissières axiales 65, 66 ce qui permet au porte-couteau de tourner dans le sens d'actionnement. Ainsi, comme cela est visible sur les figures 14 et 15, le conducteur fracturable est rompu.

Comme cela est représenté sur les figures 13 et 15, une partie du conducteur fracturable 41 est logée dans une goulotte 69 disposée dans la partie inférieure du porte-couteau. Dans la position armée représentée à la figure 13, l'axe de la goulotte est sensiblement parallèle et/ou confondu avec l'axe du conducteur fracturable tendu. Dans la position armée, les parois de la goulotte 69 n'exercent pas de contrainte sur le conducteur fracturable tendu. De surcroît, les parois de la goulotte 69 ne sont pas en contact avec le conducteur fracturable. Ainsi, le conducteur fracturable est suffisamment distant des parties internes du dispositif de protection et un courant de forte intensité peut donc circuler dans ledit conducteur sans interférer avec ces parties internes. Dans la position représentée à la figure 15, l'axe de la goulotte 69 s'est déplacé en rotation en même temps que le porte-couteau.

Dans le mouvement de rotation du porte-couteau, une extrémité du conducteur fracturable a été rompue et la goulotte 69 a entraîné dans sa rotation la partie dudit conducteur fracturable logée dans ladite goulotte et dont l'extrémité est rompue. Les deux extrémités du conducteur fracturable apparues lors de la rupture dudit conducteur ont donc été écartées l'une par rapport à l'autre. Ainsi, dans le processus de rupture du conducteur fracturable, l'extinction de l'arc est facilitée par la vitesse de rotation du porte-couteau. Une fois le conducteur fracturable rompu, le risque d'amorçage est réduit par l'écartement et la vitesse d'écartement des extrémités dudit conducteur issues de la rupture. Le volume de la goulotte dans laquelle est logé le conducteur fracturable étant isolé du compartiment étanche du condensateur, la coupure du conducteur fracturable est ainsi réalisée dans un environnement dépourvu de gaz de décomposition et cette coupure s'en trouve donc améliorée.

Pour une meilleure compréhension, différentes positions du porte-couteau suite au déverrouillage sont illustrées de manière schématique sur les figures 17b à 17c.

Dans le cas représenté à la figure 17b, la pression régnant dans l'enveloppe du condensateur a dépassée le seuil de déclenchement et la partie mobile non représentée se déplace entre la position initiale et une position d'actionnement. Pendant ce déplacement, la partie mobile vient d'abord en contact avec le porte couteau. Une fois que la partie mobile est en contact avec le porte-couteau elle exerce une force sur ce dernier supérieure à la force de rappel du ressort de compression 67. Le porte-couteau 45 est donc poussé par la partie mobile comme l'indique la flèche 86. Le mouvement en translation du porte-couteau est guidé par le coulissement relatif des protubérances 61, 62 dans les glissières axiales 65, 66 parallèles à l'axe de translation et perpendiculaires au plan de rotation. Dans la position intermédiaire représentée à la figure 17b, la rotation du porte-couteau n'est plus entravée par l'engagement des protubérances 61, 62 dans les glissières axiales 65, 66.

Dans le cas représenté à la figure 17c, les protubérances 61, 62 sont engagées dans les glissières latérales 71. L'énergie accumulée par le ressort de torsion non représenté sur la figure 17c est donc libérée et le porte-couteau est donc entrainé en rotation dans le sens d'actionnement. Dans la position intermédiaire représentée à la figure 17c, le porte-couteau se déplace en rotation comme cela est indiqué par la flèche 88. Le couteau est donc entraîné avec une vitesse et/ou une accélération suffisante pour rompre le conducteur fracturable.

Dans le mode de réalisation représenté, la partie mobile correspond à la partie centrale d'une membrane de type cloquant et présente donc deux positions stables. Ainsi, tant que la pression n'a pas atteint le seuil de déclenchement, la partie mobile reste dans la position initiale. Dès que cette pression dépasse le seuil de déclenchement, la partie mobile est déplacée vers une position stable d'actionnement. Dans d'autres modes de réalisation non représentés, le déplacement de la partie mobile peut être progressif. C'est le cas, par exemple, d'une partie mobile de type piston.

Dans d'autres modes de réalisation, le conducteur fracturable peut comporter un élément fusible capable de fondre lorsque l'intensité du courant dans les armatures du condensateur dépasse une limite prédéterminée. Cet élément fusible peut être disposé au niveau du point de rupture du conducteur fracturable.

Les moyens de verrouillage et de déverrouillage peuvent comporter des éléments déformables ou fusibles en réponse à une élévation de la température. Par exemple, les protubérances 61, 62 peuvent être dans un matériau fusible, pour libérer l'énergie nécessaire pour rompre le conducteur fracturable lorsque la température dépasse un seuil prédéterminé.

La partie mobile peut également être mise en mouvement par un élément dans un matériau qui est extensible en réponse à une élévation de température. C'est le cas, par exemple, d'un piston actionné par un élément dans un tel matériau.

Un avantage du mode de réalisation représenté est que le dispositif ne peut être réarmé sans intervention extérieure, ce qui permet une utilisation sécuritaire.

Un autre avantage du mode de réalisation représenté est que la vitesse du couteau est démultipliée par rapport à la vitesse de déplacement de la partie mobile.

Un autre avantage du mode de réalisation représenté est qu'il peut être réutilisable après réarmement.

Un autre avantage du mode de réalisation représenté est que le dispositif de protection peut être pré-assemblé avant d'être monté sur l'enveloppe du condensateur.

## Revendications

1. Dispositif de protection (11) pour condensateur (32) équipé de deux armatures et d'une enveloppe (31), ledit dispositif comprenant :
- un boitier (12) destiné à être monté sur l'enveloppe,
- un conducteur fracturable (41) destiné à être monté en série avec l'une des armatures,
- des moyens de rupture pour rompre le conducteur, et
- une partie mobile (18) déplaçable, sous l'effet de la pression dans l'enveloppe, dans un mouvement en translation le long d'un axe longitudinal (Z-Z'), ladite partie mobile étant montée de façon à actionner les moyens de rupture lorsque la pression dépasse un seuil de déclenchement,
**caractérisé en ce que** les moyens de rupture comportent des moyens d'accumulation d'une énergie nécessaire pour rompre le conducteur (41), et des moyens de verrouillage et de déverrouillage permettant de libérer ladite énergie lorsque les moyens de rupture sont actionnés.

2. Dispositif selon la revendication 1, **caractérisé en ce que** les moyens de rupture sont actionnés lorsque la partie mobile (18) est déplacée au delà d'une position limite correspondant au dépassement du seuil de déclenchement.

3. Dispositif selon l'une des revendications 1 ou 2, **caractérisé en ce que** les moyens de rupture comportent un couteau (44) et un porte-couteau (45) sur lequel le couteau est monté fixement.

4. Dispositif selon la revendication 3, **caractérisé en ce que** le porte-couteau (45) est monté mobile dans le boitier (12) et est déplaçable en rotation autour de l'axe longitudinal (Z-Z'), et **en ce que** ledit dispositif comporte des moyens de guidage (71) en rotation du porte-couteau (45).

5. Dispositif selon l'une des revendications 3 ou 4, **caractérisé en ce que** les moyens de d'accumulation d'énergie comportent un ressort de torsion (53) monté entre le porte-couteau (45) et le boitier (12), ledit ressort étant bandé lorsque le porte-couteau est dans une position armée.

6. Dispositif selon l'une des revendications 4 ou 5, **caractérisé en ce que** le porte-couteau (45) est également déplaçable dans un mouvement de translation selon l'axe longitudinal (Z-Z').

7. Dispositif selon la revendication 6, **caractérisé en ce que** les moyens de verrouillage et de déverrouillage comportent :
- au moins une glissière axiale (65, 66) orientée dans une direction parallèle à l'axe longitudinale (Z-Z'),
- au moins une protubérance (61, 62) pour être engagée dans la glissière axiale, et
- des moyens de maintien de la protubérance dans la glissière axiale.

8. Dispositif selon la revendication 7, **caractérisé en ce que** la protubérance (61, 62) est disposée sur une surface interne (63) du boitier (12), et **en ce que** la glissière axiale (65, 66) est disposée sur une surface externe (64) périphérique du porte-couteau (45).

9. Dispositif selon l'une des revendications 7 ou 8, **caractérisé en ce que** les moyens de maintien de la protubérance dans la glissière axiale comportent des moyens de rappel (67) montés entre le porte-couteau (45) et le boitier (12) pour appliquer sur le porte-couteau une force de rappel et pour maintenir le porte-couteau dans la position armée.

10. Dispositif selon l'une des revendications 3 à 9, **caractérisé en ce que** le porte-couteau (45) comporte des moyens d'écartement des extrémités du conducteur apparaissant consécutivement à la rupture du conducteur (41).

11. Dispositif selon la revendication 10, **caractérisé en ce que** les moyens d'écartement comportent une goulotte (69) disposée dans le porte-couteau (45) dans laquelle est logé au moins une partie du conducteur fracturable (41) de sorte que, consécutivement à la rupture du conducteur fracturable, ladite partie du conducteur fracturable est entrainée par la rotation du porte-couteau (44).

12. Dispositif selon l'une des revendications 1 à 11, **caractérisé en ce que** la partie mobile (18) est essentiellement constituée par une partie centrale mobile d'une membrane déformable (17) comportant une partie périphérique (19) destinée à être montée sur le boitier (12).

13. Dispositif selon la revendication 12, **caractérisé en ce que** la partie périphérique (19) est montée hermétiquement sur le boitier (12) pour isoler un volume comportant le conducteur fracturable.

14. Dispositif selon l'une des revendications 1 à 13, caractérisé en ce le conducteur fracturable (41) comporte un élément fusible.

15. Condensateur (32) équipé de deux armatures et comportant un dispositif de protection (11) dudit condensateur, ledit dispositif comportant un conducteur fracturable (41) monté en série avec l'une des armatures, **caractérisé en ce que** le dispositif de protection est selon l'une des revendications précédentes.

## Patentansprüche

1. Schutzeinrichtung (11) für einen Kondensator (32) mit zwei Belägen und einer Umhüllung (31), welche Einrichtung
ein Gehäuse (12) zur Befestigung auf der Umhüllung,
einen durchtrennbaren Leiter (41), der dazu dient, mit einem der Beläge in Reihe geschaltet zu werden,
Trennmittel zum Durchtrennen des Leiters sowie
ein bewegliches Teil (18) umfasst, das unter Einwirkung des in der Umhüllung herrschenden Drucks verschoben werden kann und dabei eine geradlinige Bewegung gemäß einer Längsachse (Z-Z') ausführt, welches bewegliche Teil so befestigt ist, dass es die Trennmittel betätigt, wenn der Druck einen bestimmten Schwellwert überschreitet,
**dadurch gekennzeichnet, dass** die Trennmittel Energiespeichermittel zur Lieferung der zum Durchtrennen des Leiters (41) erforderlichen Energie sowie Verriegelungs- und Entriegelungsmittel umfassen, die eine Freigabe der genannten Energie bei Betätigung der Trennmittel erlauben.

2. Einrichtung nach Anspruch 1, **dadurch gekennzeichnet, dass** die Trennmittel betätigt werden, wenn das bewegliche Teil (18) über eine Grenzlage hinaus bewegt wird, die dem Überschreiten des Schwellwerts entspricht.

3. Einrichtung nach Anspruch 1 oder 2, **dadurch gekennzeichnet, dass** die Trennmittel ein Messer (44) und einen Messerträger (45) umfassen, mit dem das Messer fest verbunden ist.

4. Einrichtung nach Anspruch 3, **dadurch gekennzeichnet, dass** der Messerträger (45) beweglich im Gehäuse (12) gelagert ist und um die Längsachse (Z-Z') verdreht werden kann und dass die genannte Einrichtung Führungsmittel (71) zur drehwirksamen Führung des Messerträgers (45) umfasst.

5. Einrichtung nach Anspruch 3 oder 4, **dadurch gekennzeichnet, dass** die Energiespeichermittel eine zwischen dem Messerträger (45) und dem Gehäuse (12) gelagerte Drehfeder (53) umfassen, welche Feder gespannt ist, wenn sich der Messerträger in einer Gespanntstellung befindet.

6. Einrichtung nach einem der Ansprüche 4 oder 5, **dadurch gekennzeichnet, dass** der Messerträger (45) auch gemäß der Längsachse (Z-Z') geradlinig verschoben werden kann.

7. Einrichtung nach Anspruch 6, **dadurch gekennzeichnet, dass** die Verriegelungs- und Entriegelungsmittel
mindestens eine parallel zur Längsachse (Z-Z') verlaufende, axiale Gleitführung (65, 66), mindestens einen Zapfen (61, 62) zum Eingriff in die axiale Gleitführung sowie Mittel zum Halten des Zapfens in der axialen Gleitführung umfasst.

8. Einrichtung nach Anspruch 7, **dadurch gekennzeichnet, dass** der Zapfen (61, 62) an einer Innenfläche (63) des Gehäuses (12) angeordnet ist und dass die axiale Gleitführung (65, 66) an einer umlaufenden Außenfläche (64) des Messerträgers (45) angeordnet ist.

9. Einrichtung nach Anspruch 7 oder 8, **dadurch gekennzeichnet, dass** die Mittel zum Halten des Zapfens in der axialen Gleitführung Rückstellungsmittel (67) umfassen, die zwischen dem Messerträger (45) und dem Gehäuse (12) gelagert sind und dazu dienen, den Messerträger mit einer Rückstellkraft zu beaufschlagen und ihn in der Gespanntstellung zu halten.

10. Einrichtung nach einem der Ansprüche 3 bis 9, **dadurch gekennzeichnet, dass** der Messerträger (45) Distanziermittel umfasst, die dazu dienen, die nach dem Durchtrennen des Leiters (41) entstehenden Leiterenden voneinander zu entfernen.

11. Einrichtung nach Anspruch 10, **dadurch gekennzeichnet, dass** die Distanziermittel eine im Messerträger (45) ausgebildete Rinne (69) umfassen, in der zumindest ein Teilabschnitt des Leiters angeordnet ist, derart, dass nach dem Bruch des durchtrennbaren Leiters der genannte Teilabschnitt des Leiters durch Drehung des Messerträgers (44) mitgeführt wird.

12. Einrichtung nach einem der Ansprüche 1 bis 11, **dadurch gekennzeichnet, dass** das bewegliche Teil (18) im Wesentlichen aus einem beweglichen Mittelteil einer verformbaren Membran besteht, die einen umlaufenden Randbereich (19) zur Befestigung im Gehäuse (12) umfasst.

13. Einrichtung nach Anspruch 12, **dadurch gekennzeichnet, dass** der umlaufende Randbereich (19) gasdicht im Gehäuse (12) befestigt ist, um einen Raum mit dem darin angeordneten durchtrennbaren Leiter abzuschließen.

14. Einrichtung nach einem der Ansprüche 1 bis 13, **dadurch gekennzeichnet, dass** der durchtrennbare Leiter (41) ein Schmelzelement umfasst.

15. Kondensator (32) mit zwei Belägen und einer Kondensator-Schutzeinrichtung (11), welche Einrichtung einen in Reihe mit einem der Beläge geschalteten durchtrennbaren Leiter (41) umfasst, **dadurch gekennzeichnet, dass** die Schutzeinrichtung nach einem der vorhergehenden Ansprüche ausgeführt ist.

## Claims

1. A protective device (11) for a capacitor (32) equipped with two armatures and an enclosure (31), said device comprising:
- a case (12) designed to be fitted on the enclosure,
- a breakable conductor (41) designed to be fitted in series with one of the armatures,
- breaking means to break the conductor, and
- a movable part (18), movable due to the effect of the pressure in the enclosure in a translational movement along a longitudinal axis (Z-Z'), said movable part being mounted in such a way as to actuate the breaking means when the pressure exceeds a tripping threshold,
**characterized in that** the breaking means comprise means for storing energy necessary to break the conductor (41), and latching and unlatching means enabling said energy to be released when the breaking means are actuated.

2. The device according to claim 1, **characterized in that** the breaking means are actuated when the movable part (18) is moved beyond a limit position corresponding to the tripping threshold being exceeded.

3. The device according to one of claims 1 or 2, **characterized in that** the breaking means comprise a knife-blade (44) and a blade-holder (45) on which the knife-blade is fixedly mounted.

4. The device according to claim 3, **characterized in that** the blade-holder (45) is fitted in movable manner in the case (12) and is movable in rotation around the longitudinal axis (Z-Z'), and **in that** said device comprises means for guiding (71) the blade-holder (45) in rotation.

5. The device according to one of claims 3 or 4, **characterized in that** the means for storing energy comprise a torsion spring (53) fitted between the blade-holder (45) and the case (12), said spring being stretched when the blade-holder is in a loaded position.

6. The device according to one of claims 4 or 5, **characterized in that** the blade-holder (45) is also movable in a translational movement along the longitudinal axis (Z-Z').

7. The device according to claim 6, **characterized in that** the latching and unlatching means comprise:
- at least one axial slide (65, 66) oriented in a direction parallel to the longitudinal axis (Z-Z'),
- at least one protuberance (61, 62) to be engaged in the axial slide, and
- means for keeping the protuberance in the axial slide.

8. The device according to claim 7, **characterized in that** the protuberance (61, 62) is arranged on an internal surface (63) of the case (12), and the axial slide (65, 66) is arranged on a peripheral external surface (64) of the blade-holder (45).

9. The device according to one of claims 7 or 8, **characterized in that** the means for keeping the protuberance in the axial slide comprise biasing means (67) fitted between the blade-holder (45) and the case (12) to apply a biasing force to the blade-holder and to keep the blade-holder in the loaded position.

10. The device according to one of claims 3 to 9, **characterized in that** the blade-holder (45) comprises means for separating the ends of the conductor appearing following breaking of the conductor (41).

11. The device according to claim 10, **characterized in that** the means for separating comprise a trunking (69) arranged in the blade-holder (45) in which at least one part of the breakable conductor (41) is housed so that, following breaking of the breakable conductor, said part of the breakable conductor is driven by the rotation of the blade-holder (45).

12. The device according to one of claims 1 to 11, **characterized in that** the movable part (18) is essentially formed by a movable central part of a deformable membrane (17) comprising a peripheral part (19) designed to be fitted on the case (12).

13. The device according to claim 12, **characterized in that** the peripheral part (19) is fitted tightly on the case (12) to isolate a volume comprising the breakable conductor.

14. The device according to one of claims 1 to 13, **characterized in that** the breakable conductor (41) comprises a fuse element.

15. A capacitor (32) equipped with two armatures and comprising a protective device (11) of said capacitor, said device comprising a breakable conductor (41) fitted in series with one of the armatures, **characterized in that** the protective device is according to one of the foregoing claims.
